# EUROPÄISCHE PATENTSCHRIFT

(11) **EP 2 697 235 B1**
(45) Veröffentlichungstag und Bekanntmachung des Hinweises auf die Patenterteilung: **29.03.2017**
(21) Anmeldenummer: 12706039.0
(22) Anmeldetag: 27.02.2012
(51) Int. Cl.: C07F 7/18, C09K 3/18

(54) **LÖSUNG UMFASSEND PROPYL-FUNKTIONELLE ALKALI-SILICONATE, SILIKATE SOWIE VERFAHREN ZU DEREN HERSTELLUNG**
SOLUTION COMPRISING PROPYLFUNCTIONAL ALKALINE SILICONATES, SILICATES AND METHODS FOR THE PRODUCTION THEREOF
SOLUTION CONTENANT DES SILICATES ET DES SILICONATES ALCALINS À GROUPE(S) PROPYLE, ET PROCÉDÉ DE PRODUCTION DE CETTE SOLUTION

(30) Priorität: 11.04.2011 DE 102011007142
(43) Veröffentlichungstag der Anmeldung: 19.02.2014
(73) Patentinhaber: Evonik Degussa GmbH, 45128 Essen (DE)
(72) Erfinder: FRIEDEL, Manuel, CH-8048 Zürich (CH); LJESIC, Spomenko, 79618 Rheinfelden (DE); WASSMER, Christian, 79688 Hausen (DE); ZÖLITZ, Susanne, 79618 Rheinfelden (DE)
(86) Internationale Anmeldenummer: PCT/EP2012/053269
(87) Internationale Veröffentlichungsnummer: WO 2012/139804

(56) Entgegenhaltungen:
- WO-A2-02/083808

## Beschreibung

Die Erfindung betrifft eine Lösung und Verfahren zur Herstellung der Lösung umfassend Propyl-funktionelle Alkali-Siliconate, Silikate und gegebenenfalls deren Co-Kondensationsprodukte.

Aufgrund der Wasseraufnahme von porösen mineralischen Baustoffen, wie Beton, Sandsteinen, Kalksandsteinen, Gips, Keramiken oder gebrannten Tonerzeugnissen, beispielsweise Mauerziegel, in Gegenwart von Wasser oder Feuchte, können die Baustoffe geschädigt werden. Eine Instandsetzung von derart geschädigten Baustoffen ist sehr aufwendig und kostenintensiv. Bekannt ist es, hydrophobierende Mittel auf die Oberfläche oder in die Masse bei der Herstellung solcher Baustoffe einzutragen, um die Wasseraufnahme und damit die Schädigung der Baustoffe zu verhindern. Seit einiger Zeit spielen Siliconate als Hydrophobierungsmittel dabei eine wichtige Rolle, insbesondere wenn weniger alkalische Baustoffe, wie Tonerzeugnisse, behandelt werden sollen.

EP 0 650 968 offenbart einen zweistufigen Prozess zur kontinuierlichen Herstellung von Alkalialkylsiliconaten aus Alkyltrichlorsilanen über Alkyltrialkoxysilane. US 4,281,147 beschreibt ein Verfahren zur Herstellung von wässrigen Alkaliorganylsiliconaten durch Reaktion von Organylalkoxypolysiloxanen mit NaOH oder KOH. EP 0 015 366 betrifft ein Verfahren zur Herstellung von Alkalichlorid-freien Alkalimethylsiliconaten durch Umsetzung von Alkalitrichlorsilanen mit einer Base, Fällung der Zwischenstufe durch Ansäuern und abschließendes Auflösen des gewaschenen Filterkuchens in Base. DE 32 20 393 beschreibt Guanidiniumorganylsiliconate und -silicate sowie ein Verfahren zur Herstellung aus Organyltrialkoxysilanen und Guanidiniumhydroxid. JP53-101022A1 offenbart Mischungen organofunktioneller Siliconate mit polyvalenten Metallionen. US 4,252,569 offenbart ein Verfahren zur Herstellung von Natriummethylsiliconaten durch Umsetzung von Natriummethyltrichlorsilanen mit einer Methanol/Wasser-Mischung in einem ersten Schritt, gefolgt von einer Einleitung der Reaktionsprodukte in wässrige Natriumhydroxid-Lauge. Hauptsächlicher Nachteil des beschriebenen Verfahrens ist die Notwendigkeit einer Phasentrennung nach dem ersten Reaktionsschritt. WO 02/083808 offenbart die hydrophobierende Wirkung von Mischungen von 20 ml Wasser, einer definierten Menge an 28%igem Kaliummethylsiliconat und/oder technischem Natriumsilicat (Wasserglas) mit 28 % SiO₂, die durch Mischen hergestellt werden und unmittelbar bei 60 °C auf Sand aufgetrocknet werden.

Aus dem Stand der Technik ist weder eine Zusammensetzung umfassend Propyl-funktionelle Alkalisiliconate, Silicate und deren Co-Kondensate bekannt noch ein technisches Verfahren zur industriellen Herstellung einer derartigen Zusammensetzung. Weiter ist aus dem Stand der Technik keine Lösung eines Propyl-funktionellen Siliconates bekannt.

Aufgabe der vorliegenden Erfindung war die Bereitstellung einer Lösung enthaltend Propyl-funktionelle Alkalisiliconate, Alkalisilikate und deren Co-Kondensationsprodukte sowie eines wirtschaftlichen Verfahrens zur Herstellung von Propyl-funktionelle Alkalisiliconat-Lösungen, enthaltend einen Alkalisilicat-Anteil, und deren Co-Kondensationsprodukte, mit einer Eignung zur hydrophobierenden Imprägnierung mineralischer Baustoffe, insbesondere von Oberflächen mineralischer Baustoffe und/oder deren Hydrophobierung in der Masse bei ihrer Herstellung. Vorzugsweise werden poröse, mineralische Baustoffe und/oder Untergründe mit den erfindungsgemäßen Lösungen imprägniert. Ebenfalls Aufgabe war die Bereitstellung stabiler Lösungen der Verbindungen, vorzugsweise mit einem hohen Gehalt dieser Verbindungen. Weiter sollten die Lösungen vorzugsweise im Wesentlichen frei von Lösemitteln sein, insbesondere Alkohol sein.

Gelöst wurden die Aufgaben durch die erfindungsgemäße Lösung nach Anspruch 1 und die erfindungsgemäßen Verfahren entsprechen den Merkmalen der Ansprüche 3 und 5, sowie die erfindungsgemäße Lösung umfassend Propyl-funktionelle Alkali-Siliconate, Alkalisilicate und gegebenenfalls deren Co-Kondensationsprodukte nach Anspruch 14.

Weitere Merkmale und deren Kombinationen sind in den Unteransprüchen und detailliert in der Beschreibung erläutert.

Gelöst werden die Aufgaben durch eine erfindungsgemäße im Wesentlichen alkoholfreie Lösung enthaltend mindestens ein Propyl-funktionelles Alkalisiliconat, mindestens ein Alkalisilicat und Co-Kondensationsprodukte dieser, wobei als im Wesentlichen alkoholfrei eine Lösung mit einem Gehalt bis maximal 2 Gew.-% an Alkohol und/oder Hydrolysealkohol gilt und wobei Alkali unabhängig voneinander Natrium und Kalium ist.

Erfindungsgemäße Lösungen enthalten besonders bevorzugt Propyl-Kaliumsiliconate, Kaliumsilikate und ggf. Co-Kondensationsprodukte von Propyl-Kaliumsiliconaten und Kaliumsilikaten. Weiter ist es bevorzugt, wenn das Siliconat und Silikat im Verhältnis von 0,5 : 10 bis 10 : 0,5 in der Lösung vorliegen oder in diesem Verhältnis gegebenenfalls in dem Co-Kondensat vorliegen, besonders bevorzugte Verhältnisse sind 4 : 1 bis 1 : 4, weiter bevorzugt sind 2 : 1 bis 1 : 2, weiter bevorzugt ist 1,5 : 1 bis 1 : 1,5 oder besser um 1 : 1. Mit diesen Verhältnissen lassen sich die besten Ergebnisse hinsichtlich Hydrophobierung und Verdünnbarkeit mit Wasser erzielen.

Unter einer Lösung wird vorzugsweise eine homogene Mischung verstanden, insbesondere umfassend Propyl-funktionelle Alkali-Siliconate, Silicate und gegebenenfalls deren Co-Kondensationsprodukte (zusammen Solute) und mindestens ein Lösemittel, hier Wasser, wobei die Solute vorzugsweise vollständig im Lösemittel, hier Wasser, gelöst sind, d. h. vorzugsweise liegt eine klare Lösung vor. Unter einer Lösung gemäß der Erfindung wird daher vorzugsweise eine homogene Zusammensetzung verstanden, in der sowohl die Propylalkalisilicate, die Alkalisilikate und gegebenenfalls deren Co-Kondensationsprodukte im Wesentlichen vollständig gelöst sind. Weiter ist die Lösung gemäß der Erfindung im Wesentlichen alkoholfrei, frei von Hydrolysealkohol und vorzugsweise frei von organischen Lösemitteln.

Gemäß einer Alternative zur Herstellung der Lösung enthaltend mindestens ein Propyl-funktionelles Alkali-Siliconat, ein Silikat und gegebenenfalls deren Co-Kondensationsprodukte wird ein Verfahren beansprucht, indem ein Propyl-funktionelle Alkali-Siliconat und ein Silikat gemischt werden, insbesondere werden eine wässrige Lösung eines Propyl-funktionellen Alkalisiliconates, vorzugsweise als Kaliumsiliconat, und eine wässrige Lösung eines Silikates gemischt, gegebenenfalls wird Wasser zugegeben. Dabei ist es bevorzugt, wenn als Silikat ein Alkalisilikat eingesetzt wird, besonders bevorzugt ein Natriumsilikat und/oder ein Kaliumsilikat.

Gemäß einer weiteren Alternative der Erfindung wurde überraschend gefunden, dass es möglich ist, Lösungen von Propyl-funktionellen Alkali-Siliconaten, Silicaten und deren Co-Kondensationsprodukten herzustellen, wenn die Herstellung aus den entsprechenden Silanhalogenen in Gegenwart von Inertgas erfolgt.

Überraschenderweise wurde auch gefunden, dass sich Propylsiliconat-Lösungen mit einem Alkalisilicat-Anteil, herstellen lassen, indem Mischungen aus Propyltrichlorsilanen und Tetrachlorsilan im gewünschten Verhältnis in einem Schritt 1 mit Ethanol oder einer Wasser/Ethanol-Mischung umgesetzt werden. Die erhaltene Mischung, das Reaktionsprodukt, kann im Schritt 2 in eine wässrige Lauge, vorzugsweise eine wässrige NaOH oder KOH Lösung, eingeleitet werden. Dabei ist es bevorzugt, wenn die Lösung so bemessen ist, dass nach Einleitung der Mischung die gewünschte Endkonzentration an Propyl-Siliconat und Alkalisilicat erhalten wird. Weiter ist es bevorzugt, wenn die Einleitung der Mischung in die Lösung in einer Weise vorgenommen wird, die sicherstellt, dass sich keine festen Ablagerungen bilden, insbesondere silicatischer Art. Dabei kann der Alkohol oder eine Wasser/Alkohol-Gemisch zu 1 bis 100 mol-%, insbesondere 10 bis 100 mol-% in Bezug auf die hydrolysierbaren Reste Si-Hal der Verbindungen I und II eingesetzt werden, insbesondere wird als Alkohol Ethanol eingesetzt. Darüber hinaus kann es bevorzugt sein, eine sub-stöchiometrische Menge Alkohol, wie EtOH oder ein Wasser/Alkohol-Gemisch, wie Wasser/EtOH, einzusetzen, insbesondere 5 bis 99 mol-%, bevorzugt 10 bis 95 mol-%, besonders bevorzugt 20 bis 90 mol-%, insbesondere um 80 mol-%, jeweils bezogen auf die molare Menge der hydrolysierbaren Si-Hal Bindungen bzw. hydrolysierbaren Hal-Resten an Silizium-Atomen, vorzugsweise der allgemeinen Formeln I und II.

Überraschenderweise wurde gefunden, dass die Umsetzung zuverlässig gelingt, wenn die Mischung aus dem Schritt 1, das Reaktionsprodukt, mittels eines kontinuierlichen N₂-Stroms in die vorgelegte wässrige Lauge eingedüst wird, d. h. die Mischung wird unmittelbar in der Lösung verteilt. Dabei ist diese Verteilung der Mischung durch die kombinierte Verwendung von intensivem Rühren und Eindüsen unter Inertgas besonders effizient. Die Bildung von festen silicatischen Partikeln oder Ablagerungen kann besonders gut vermieden werden.

Erfindungsgemäß wird in Schritt 3 die erhaltene Lösung vom Hydrolysealkohol und zugesetztem Alkohol befreit und kann bei Bedarf mit Wasser weiter verdünnt werden. Der Alkohol und/oder Hydrolysealkohol wird vorzugsweise destillativ entfernt, wobei vorzugsweise in dem Maße Wasser zugegeben wird, wie Alkohol und/oder Hydrolysealkohol entfernt wird. Generell ist aber auch schon die erhaltene alkoholhaltige Lösung gebrauchsfertig und für eine Anwendung geeignet. Ein Vorteil der rein wässrigen alkoholfreien Lösung ist ihr reduzierter VOC Gehalt in der späteren Anwendung.

Das erfindungsgemäße dreistufige Verfahren zur Herstellung von Lösungen aus Propylsiliconaten und Silicaten in wässriger Lösung, umfasst einen ersten Reaktionsschritt, in dem eine Mischung aus Dipropyldichlor- und/oder Propyltrichlorsilanen, vorzugsweise reines Propyltrichlorsilan, und Tetrachlorsilan mit einem Wasser/Ethanol-Gemisch oder reinem Ethanol umgesetzt wird, und das erhaltenen Reaktionsprodukt in einem zweiten Schritt mittels eines Inertgasstromes, insbesondere eines N₂-Gasstromes in eine wässrige Lauge, vorzugsweise eine wässrige Alkalihydroxidlösung, in der Weise eingedüst wird, die die Bildung fester Ablagerungen, insbesondere silicatischer Art, verhindert. Dabei kann es bevorzugt sein, eine sub-stöchiometrische Menge EtOH oder Wasser/EtOH-Gemisch, bezogen auf die molare Menge der hydrolysierbaren Si-Hal Bindungen, zu benutzen. Im dritten Schritt wird der zugesetzte Alkohol und/oder Hydrolysealkohol aus der Lösung entfernt.

Gegenstand der Erfindung ist ein dreistufiges Verfahren zur Herstellung von Lösungen umfassend Propyl-funktionelle Alkalisiliconate, Alkalisilicate und deren Co-Kondensationsprodukte sowie optional einem Gehalt an Alkohol, die in Gegenwart eines Inertgases hergestellt werden, die so hergestellten Lösungen werden von Alkohol und/oder Hydrolysealkohol befreit, vorzugsweise wird der Alkohol und/oder Hydrolysealkohol destillativ unter vermindertem Druck und erhöhter Temperatur entfernt. Gegenstand der Erfindung sind daher auch Lösungen umfassend Alkali-Propylsiliconate, Silicate und deren Co-Kondensationsprodukte sowie Lösungen erhältlich nach diesem Verfahren, die im Wesentlichen alkoholfrei, insbesondere frei von organischen Lösemitteln sind.

Ebenfalls Gegenstand der Erfindung ist ein Verfahren zur Herstellung einer Lösung umfassend mindestens ein Propyl-funktionelles Alkali-Siliconat und ein Silikat und gegebenenfalls deren Co-Kondensationsprodukte, sowie im wesentlichen alkoholfreie Lösungen erhältlich nach diesem Verfahren, umfassend die Schritte
1) Herstellen einer Mischung umfassend mindestens ein Propyl-funktionelles Silan der allgemeinen Formel I, mindestens ein Halogensilan der Formel II und Alkohol, indem
   - mindestens ein organofunktionelles Silan der allgemeinen Formel I

      (R¹)ₓSiHal_{(y-x)} (I)

      mit R¹ unabhängig ein Propyl-Rest, wie iso-Propyl- oder n-Propyl-Rest, und mit Hal als hydrolysierbaren Rest, wobei Hal unabhängig Chlor oder Brom, bevorzugt Chlor ist, und mit x gleich 1 oder 2 und mit y = 4, vorzugsweise ist x = 1 und
   - mindestens ein Halogensilan der Formel II

      Si(Hal)₄ (II)

      mit Hal als hydrolysierbarer Rest, wobei Hal unabhängig gleich Chlor oder Brom ist, bevorzugt ist Hal gleich Chlor, und
   - mindestens ein Alkohol und gegebenenfalls Wasser umgesetzt werden, insbesondere ein Alkohol-Wasser-Gemisch, insbesondere umfasst der Alkohol Ethanol, Methanol, Propanol, wie iso-Propanol oder n-Propanol, oder Mischungen mit mindestens zwei der Alkohole, bevorzugt ist Ethanol;
2) Einleiten der umgesetzten Mischung aus Schritt 1 in Gegenwart von Inertgas, vorzugsweise unter Inertgas, in eine wässrige Alkalihydroxid Lösung, vorzugsweise eine wässrige NaOH und/oder KOH Lösung; wobei das Inertgas im Verfahren so zugeführt wird, dass es die Mischung aus Schritt 1 portionsweise, vorzugsweise tropfenweise, unmittelbar in die wässrige alkalische Lösung einbringt, insbesondere in die Lösung eindüst oder die Mischung aus Schritt 1 in der Lösung verteilt, besonders bevorzugt wird die Mischung aus Schritt 1 in der Lösung homogen verteilt.
3) Entfernen des Alkohols und/oder Hydrolysealkohols, insbesondere wird der Alkohol destillativ, bevorzugt unter vermindertem Druck und erhöhter Temperatur, entfernt,
wobei es weiter bevorzugt ist, dass die Mischung in Schritt 1 und/oder die Lösung im Schritt 2 intensiv gerührt werden. Vorzugsweise wird die Mischung im Schritt 1 unter intensivem Rühren hergestellt und wird auch unter intensivem Rühren in Gegenwart eines Inertgases direkt in die Lösung im Schritt 2 eingerührt und verteilt. Bevorzugt können Anker-, Propeller-, Kreuzbacken-, Impeller- und/oder Scheibenrührer eingesetzt werden. Darüber hinaus können vorteilhaft Strömungsstörer eingesetzt werden. Der in Schritt 1 eingesetzte Alkohol wird erfindungsgemäß in der Mischung aus Schritt 1 im zweiten Verfahrensschritt mit in die wässrige Alkalihydroxidlösung eingeleitet. Anders als bei Verfahren des Standes der Technik ist eine Abtrennung nicht notwendig, kann aber optional nach Einleiten in die wässrige Alkalihydroxidlösung erfolgen, z. B. destillativ.

Erfindungsgemäß wird in Schritt 2 eine Lösung umfassend Propyl-funktionelle Alkali-Siliconate, Silicate und gegebenenfalls deren Co-Kondensationsprodukte erhalten, wobei die Propyl-Gruppen des Siliconats unabhängig n-Propyl oder iso-Propyl- sein können. Der Propyl-Rest R¹ der allgemeinen Formel I ist besonders bevorzugt n-Propyl.

Unter Alkalihydroxid werden sowohl Erdalkali- und Alkalihydroxide verstanden. Dies sind insbesondere aber nicht abschließend: Lithiumhydroxid, Natriumhydroxid, Kaliumhydroxid, Magnesiumhydroxid, Calciumhydroxid, Bariumhydroxid, die auch in Mischungen oder zusammen mit anderen alkalischen, wasserlöslichen Salzen oder Verbindungen vorliegen können. Natriumhydroxid und vorzugsweise Kaliumhydroxid sind bevorzugt.

Das Inertgas, kann ein Gas bzw. Trägergas sein, mit der Maßgabe, dass es nicht mit den Edukten oder Produkten eine Reaktion eingehen darf, insbesondere darf es nicht mit der alkalischen Lösung reagieren. Kohlendioxid gilt daher nicht als Inertgas. Das Inertgas umfasst vorzugsweise Stickstoff und/oder Argon und weitere, nicht mit den Mischungen und/oder Lösungen reagierende Gase. Dies ist beispielsweise Propan etc. Generell können also auch Lösungsmittel verdampft werden, wie n-Pentan oder weitere dem Fachmann bekannte verdampfbare Lösungsmittel. Generell sind jedoch nicht brennbare und ökologisch verträgliche Gase bevorzugt.

Bevorzugte Propyl-funktionelle Silane der allgemeinen Formel I sind Propylhalogensilane, wie ein n-Propyltrihalogensilan, iso-Propyltrihalogensilan, Di-n-propyldihalogensilan, Di-iso-propyldihalogensilan, wie vorzugsweise n-Propyltrichlorsilan, iso-Propyltrichlorsilan, Di-n-Propyldichlorsilan, iso-Propyl-, n-Propyldichlorsilan oder Di-isopropyldichlorsilan, wobei der Fachmann auch die entsprechenden bromierten oder gemischt halogenierten Propylhalogensilane, insbesondere umfassend Chlor und Brom, kennt und einsetzten kann.

Gemäß dem erfindungsgemäßen Verfahren ist es bevorzugt, wenn das Propyl-funktionelle Silan der allgemeinen Formel I und das Halogensilan der Formel II in Schritt 1 in einem molaren Verhältnis von 0,5 : 10 bis 10 : 0,5 zugesetzt werden, insbesondere vorgelegt werden, vorzugsweise im Verhältnis von 1 : 10 bis 10 : 1, wobei ein Verhältnis von etwa 1 : 1 bis 9 : 1 besonders bevorzugt ist. Erfindungsgemäß wird ein Verhältnis an Silan der Formel I zu Halogensilan der Formel II von etwa 1 : 1 eingesetzt, insbesondere mit einer Schwankung von plus/minus 0,5.
Dabei ist es alternativ oder zusätzlich zu den vorgenannten Merkmalen bevorzugt, wenn der Alkohol; insbesondere Ethanol, Methanol, Propanol, wie iso-Propanol oder n-Propanol, oder Mischungen mit mindestens zwei der Alkohole; im Schritt 1 im Verhältnis von 1 bis 100 mol-% in Bezug auf die hydrolysierbaren Reste, d. h. in Bezug auf die Summe an Hal (Halogen-Atomen in I und II), insbesondere an Chlor-Atomen, in Mol in den allgemeinen Formeln I und II zugesetzt wird. Liegen also circa 2 mol Chlor-Atome in der Summe in der Mischung umfassend Silane der Formel I und II vor, so werden vorzugsweise etwa 0,2 bis 2 mol Alkohol, wie vorzugsweise Ethanol, zugesetzt. Bevorzugt werden zu einem Alkyltrichlorsilan und Tetrachlorsilan, die im Verhältnis von 10 : 5 bis 10 : 5 vorliegen, 1 bis 100 mol-% Ethanol in Bezug auf die Summe an Chloratomen in Mol, bevorzugt 5 bis 99 mol-%, besonders bevorzugt 10 bis 95 mol-%, ganz besonders bevorzugt 20 bis 90 mol-%, insbesondere um 80 mol-%, zugesetzt.

Ein besonderes Merkmal des Verfahren ist es dabei, dass die Mischung aus Schritt 1 unmittelbar in Schritt 2 in eine wässrige, alkalische Lösung eingeleitet und zu einer Lösung umfassend Propyl-funktionelle Siliconate, Silicate und gegebenenfalls deren Co-Kondensationsprodukte umgesetzt wird, insbesondere wird die Mischung aus Schritt 1 portionsweise, vorzugsweise tropfenweise mittels Inertgas unmittelbar in die Lösung eingedüst oder unmittelbar in der Lösung verteilt, d. h. unterhalb der Oberfläche der Lösung wird die Mischung aus Schritt 1 eingeleitet oder eingedüst, vorzugweise wird sie direkt stark verteilt. Eine besonders effiziente Verteilung der portionsweisen, insbesondere tropfenweise eingeleiteten Lösung wird mit einer Kombination einer pneumatischen Verteilung, d. h. durch das Inertgas, und einer mechanischen Verteilung, wie Rühren, erzielt.

Das Stoffmengenverhältnis an hydrolysierbaren Resten der Mischung aus Schritt 1 zum eingesetzten Alkalihydroxid liegt in der Regel zwischen 1 : 5 bis 5 : 1, vorzugsweise liegt es zwischen 1 : 3 bis 3 : 1, besonders bevorzugt um etwa 1 : 2 bis 2 : 1, oder auch um 1 : 1 mit einer Schwankung von plus/minus 0,5. So können auf etwa 1 mol hydrolysierbare Reste etwa 2 mol Alkalihydroxid eingesetzt werden oder nach einer alternativen Verfahrensführung auch auf etwa 2 mol hydrolysierbare Gruppen etwa 1 mol Alkalihydroxid. Bei der Zugabe zur Alkalihydroxid-Lösung umfassen die hydrolysierbaren Reste die Hal-Reste und/oder die durch Veresterung mit dem Alkohol gebildeten Alkoxygruppen, insbesondere an den Silanen der allgemeinen Formeln I und/oder II als auch gegebenenfalls an den gebildeten Propyl-funktionellen Alkalisiliconaten, Silicaten und gegebenenfalls gebildeten Co-Kondensationsprodukten dieser.

Der Alkohol in der Lösung; insbesondere Ethanol, Methanol, Propanol, wie iso-Propanol oder n-Propanol, oder Mischungen mit mindestens zwei der Alkohole; wobei die Lösung Propyl-funktionelle Alkali-Siliconate, Silicate und gegebenenfalls deren Co-Kondensationsprodukte umfasst, wird anschließend im Wesentlichen vollständig entfernt. Dies kann vorzugsweise destillativ erfolgen. Erfindungsgemäß wird der Alkohol destillativ aus der Lösung entfernt, um eine VOC verminderte Lösung zu erhalten, die unmittelbar gebrauchsfertig ist und bei Bedarf einfach mit Wasser weiter verdünnt werden kann.

Generell kann die Lösung, insbesondere die alkoholfreie Lösung, direkt bei der Herstellung auf einen Gehalt an Propyl-funktionellen Alkalisiliconaten, Alkalisilicaten und deren Co-Kondensationsprodukte von 1 bis 40 Gew.-% und alle dazwischen liegende Werte eingestellt werden - sie ist unmittelbar gebrauchsfertig - vorzugsweise kann sie auf einen Gehalt von 1 bis 30 Gew.-% eingestellt werden, alternativ auf 7 bis 40 Gew.-%, besonders bevorzugt auf 7 bis 30 Gew.-% oder auch um 8 bis 28 Gew.-%. Nach dem erfindungsgemäßen Verfahren ist es folglich möglich hochkonzentrierte Lösungen herzustellen. Diese hochkonzentrierten Lösungen sind stabil, bevorzugt über 12 Monate. Bei Bedarf kann die Lösung vor einer Verwendung, d. h. eine rein wässrige im Wesentlichen alkoholfreie Lösung, mit Wasser und/oder mit einem organischen Lösemittel auf einen Gehalt an Propyl-funktionellen Alkalisiliconaten, Alkalisilicaten und deren Co-Kondensationsprodukte von 1 bis 40 Gew.-% und auf alle dazwischen liegende Werte verdünnt werden, vorzugsweise auf 1 bis 30 Gew.-%, oder alternativ auf 7 bis 40 Gew.-%, besonders bevorzugt auf 7 bis 30 Gew.-% oder auch um 8 bis 28 Gew.-%.

Der Gehalt hängt auch direkt mit dem eingesetzten mineralischen Baustoff und/oder der Art der Anwendung zusammen. So können für die Anwendung auf Oberflächen Lösungen mit einem geringen Gehalt geeignet sein und beispielsweise bei der Hydrophobierung in der Masse Lösungen mit einem hohen Gehalt, insbesondere bei der Hydrophobierung von Gips enthaltenden mineralischen Baustoffen. Ebenfalls können hoch konzentrierte Lösungen bevorzugt sein, wenn bereits Wasser als Anmachwasser bei der Hydrophobierung in der Masse zugesetzt wird. Generell kann der Wirkstoffgehalt auch zwischen 1 bis 10 Gew.-% in der Lösung betragen, oder je nach Anwendung 1 bis 5 Gew.-%, 5 bis 10 Gew.-%, 10 bis 15 Gew.-%, 15 bis 20 Gew.-% oder 20 bis 30 Gew.-% oder auch 30 bis 40 Gew.-%.

Während der Herstellung der Mischung aus Propyl-funktionellem Silan der Formel I, dem Halogensilan der Formel II und Alkohol oder Alkohol/Wasser-Mischung steigt die Temperatur reaktionsbedingt im Schritt 1 an. Verfahrensgemäß sollte die Temperatur im Schritt 1 80 °C nicht übersteigen, besonders bevorzugt soll die Temperatur 60 °C nicht übersteigen, gegebenenfalls wird gekühlt. Auch im Schritt 2 steigt die Temperatur reaktionsbedingt an, sie soll jedoch 80 °C, vorzugsweise 60 °C nicht übersteigen, d. h. gegebenenfalls wird im Schritt 2 gekühlt oder die Mischung aus Schritt 1 wird langsamer, portionsweise in die alkalische Lösung eingeleitet. In Schritt 3 wird vorzugsweise der Alkohol und/oder Hydrolysealkohol vorzugsweise so unter Vakuum entfernt, dass die Temperatur nicht über 80 °C, vorzugsweise nicht über 60 °C ansteigt. Daher wird der Alkohol und/oder Hydrolysealkohol aus der Lösung vorzugsweise bei unter 300 mbar destillativ entfernt, bevorzugt unter 180 mbar. Dabei kann die Lösung auf etwa 50 °C temperiert werden.

Bei der Einleitung der Mischung aus Schritt 1 in die Alkalihydroxid-Lösung können sich Propyl-funktionelle Alkalisiliconate, wie MO[Si(R¹)ₓY_{((y-2)-x)}O]ₐM der idealisierten Formel III oder MO[Si(R¹)ₓO⁻_{((y-2)-x)}O]ₐM + Mₐ der idealisierten Formel IIIa, Alkalisilicate, wie MO[Si(Y)₂]_{b}OM der idealisierten Formel IV, und gegebenenfalls deren Co-Kondensationsprodukte bilden, insbesondere organofunktionelle Co-Kondensate von Alkalisiliconaten und Alkalisilicaten, die vorzugsweise in Form von Propyl-funktionellen Alkalisiloxanolaten vorliegen und die Alkalisilicate umfassen, wie beispielsweise gemäß der idealisiert dargestellten Formel V MO[Si(R¹)ₓY_{((y-2)-x)}O]ₐ[Si(Y)₂]_{b}OM oder der idealisiert dargestellten Formel Va MO[Si(R¹)ₓY_{((y-2)-x)}O]ₐ[Si(Y)₂]_{b}[Si(R¹)ₓY_{((y-2)-x)}O]ₐOM, wobei Y in den Formeln III, IIIa, IV, V und/oder Va jeweils unabhängig Y = O_{1/2} in einer Siloxan-Bindung oder OM, mit M gleich ein einwertiges Alkaliion, wie Na⁺ oder K⁺ in - ONa, -OK, oder Wasserstoff für -OH, R¹ wie definiert, mit a und b unabhängig voneinander größer gleich 1 und jeweils unabhängig x = 1 oder 2 und y = 4, bevorzugt ist x = 1. Vorzugsweise können a und b größer gleich 2 sein, wie bspw. zwischen 2 bis 30. Wobei sowohl die Propyl-funktionellen Alkalisiliconate, die Alkalisilicate und gegebenenfalls die Co-Kondensationsprodukte sowohl lineare, cyclische, verzweigte und/oder raumvernetzte Strukturen aufweisen können, da sie aus di-, tri- und tetrafunktionellen hydrolysierbaren Silanen abgeleitet sind.

Ebenso Gegenstand der Erfindung ist ein Verfahren, in dem die Mischung aus Schritt 1 für die Durchführung von Schritt 2 mittels einer Dosiervorrichtung, die im einfachsten Fall ein Regelorgan aufweist, wie ein Absperrorgan bzw. einen Absperrhahn, gegebenenfalls in Gegenwart von Inertgas, insbesondere einem unter Druck stehendem Inertgas, vorzugsweise oberhalb von 1 bar bis 10 bar, portionsweise, insbesondere tropfenweise, einer Vorrichtung mit Einleitungsmittel zugeführt wird, wobei das Einleitungsmittel vorzugsweise ein Einleitungsrohr oder - Schlauch ist, und die Vorrichtung mit Inertgas, insbesondere im Lumen mit Inertgas, überlagert ist, und das Ende des Einleitungsmittels, insbesondere des Einleitungsrohres oder -schlauches, in die alkalische Lösung eingetaucht ist, oder, dass die Mischung aus Schritt 1 für die Durchführung von Schritt 2 in eine Dosiervorrichtung überführt wird und mit Inertgas überlagert wird, insbesondere mit einem unter Druck stehenden Inertgas, vorzugsweise mit einem Druck von 1 bar bis 10 bar, aus der Dosiervorrichtung wird die Mischung aus Schritt 1 portionsweise, insbesondere tropfenweise, in eine Vorrichtung mit Einleitungsmittel gegeben, insbesondere ist das Einleitungsmittel ein Einleitungsrohr oder -Schlauch, wobei die Vorrichtung mit Inertgas überlagert ist, und das Ende des Einleitungsmittels, insbesondere des Einleitungsrohres oder -schlauches, in die alkalische Lösung eingetaucht ist. Ebenso kann es noch zweckmäßig sein, wenn das Ende des Einleitungsmittels knapp unter der Oberfläche eingetaucht ist, besonders bevorzugt ist es möglichst tief in die Lösung eintaucht.

Dabei ist es weiter bevorzugt, wenn das Verfahren so durchgeführt wird, dass ein Inertgasstrom, beispielsweise ein Stickstoff- und/oder Argonstrom, geteilt wird und ein Teil des Inertgases in die Dosiervorrichtung, insbesondere über die Gaszuleitung, und ein Teil des Inertgases in die Vorrichtung mit Einleitungsmittel, insbesondere über die Gaszuleitung, überführt wird. Vorzugsweise ist das Einleitungsmittel ein Einleitungsrohr und/oder -schlauch. Vorzugsweise ist der Inertgasstrom an den beiden genannten Gaszuleitungen gekoppelt, um die Dosierung und die Verfahrensführung wirtschaftlich zu gestalten.

Zusätzlich oder alternativ zu einem oder mehreren vorgenannten Merkmalen ist es weiter bevorzugt, wenn die Mischung aus Schritt 1 mittels der Dosiervorrichtung portionsweise in die Vorrichtung mit Einleitungsmittel überführt wird, d. h. vorzugsweise in das Einleitungsrohr, und dort mittels des Inertgases durch das Einleitungsmittel, insbesondere Einleitungsrohr, in die alkalische Lösung gedrückt wird, vorzugsweise wird die Mischung aus Schritt 1 jeweils tropfenweise unmittelbar in die Lösung gedrückt, besonders vorzugsweise wird die Mischung aus Schritt 1 durch das Inertgas unmittelbar in die Lösung eingedüst, weiter bevorzugt wird die Mischung aus Schritt 1 durch das Inertgas unter Druck in die Lösung eingedüst. Dabei sind die Tropfen bevorzugt jeweils durch das Inertgas voneinander separiert. Zusätzlich kann die Verteilung und Verdünnung der Mischung 1 aus Schritt 1 am Ende des Einleitungsmittels in der wässrigen Alkalihydroxid-Lösung durch intensives Rühren weiter unterstützt werden.

In dem erfindungsgemäßen Verfahren wird in Schritt 3 der Alkohol und/oder Hydrolysealkohol entfernt, insbesondere wird der Alkohol destillativ, bevorzugt unter vermindertem Druck und erhöhter Temperatur entfernt. Bevorzugt wird bei unter 300 mbar, weiter bevorzugt unter 180 mbar und insbesondere bei etwa 50 °C destilliert.

Ebenfalls Gegenstand der Erfindung ist eine Lösung erhältlich nach dem erfindungsgemäßen Verfahren, die Propyl-funktionellen Alkalisiliconate mit Alkalisilikaten, weiter bevorzugt Kaliumsilikat, und Co-Kondensationsprodukte von Propyl-funktionellen Alkalisiliconaten mit Alkalisilikaten aufweist und im Wesentlichen alkoholfrei ist, wobei als im Wesentlichen alkoholfrei eine Lösung mit einem Gehalt bis maximal 2 Gew.-% an Alkohol und/oder Hydrolysealkohol gilt und, wobei Alkali unabhängig voneinander Natrium und Kalium ist.

Als im Wesentlichen alkoholfrei und/oder frei von Hydrolysealkohol gilt eine Lösung mit Gehalt von vorzugsweise unter 1 Gew.-ppm bis maximal 2 Gew.-% an Alkohol und/oder Hydrolysealkohol, bevorzugt zwischen 10 Gew.-ppm und 1 Gew.-%, besonders bevorzugt zwischen 100 Gew.-ppm und 0,5 Gew.-%, jeweils bezogen auf das Gesamtgewicht der Lösung. Die im Wesentlichen alkoholfreie Lösung weist einen Flammpunkt von über 100 °C auf.

Ein weiterer Gegenstand der Erfindung ist die Verwendung einer erfindungsgemäßen Lösung oder einer Lösung, die nach dem erfindungsgemäßen Verfahren hergestellt wurde zur Hydrophobierung von mineralischen Baustoffen, insbesondere einer Lösung die im Wesentlichen alkoholfrei ist, vorzugsweise zur Hydrophobierung der Oberfläche mineralischer Baustoffe oder zur Hydrophobierung von mineralischen Baustoffen in der Masse. Dabei kann die Verwendung der Lösung zur Hydrophobierung eines Teils des mineralischen Baustoffes oder auch zur Hydrophobierung des gesamten mineralischen Baustoffes verwendet werden, jeweils umfassend Beton, Estrich, Putz, Gips, Mörtel, Lehm, Ton, Sand, Keramik, Terrakotta, Kalksandstein Naturstein, wie Sandstein, Marmor, Granit sowie Artikel daraus oder Artikel enthaltend diese, wie Formteile, die beispielsweise Rohre, Ziegel, Bodenplatten, Wände, Gartenkübel, Dachziegel sowie weitere übliche, dem Fachmann bekannte mineralische Baustoffe und Artikel aus diesen Baustoffen umfassen.

Die folgenden Beispiele erläutern das erfindungsgemäße Verfahren und die erfindungsgemäße Anlage näher, ohne die Erfindung auf diese Beispiele zu beschränken.

### Beispiele

### Beispiele für eine Anlage zur Durchführung des Verfahrens

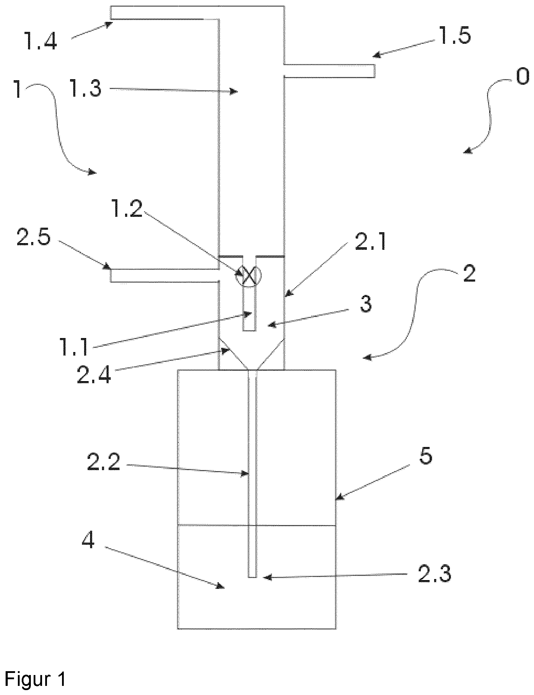

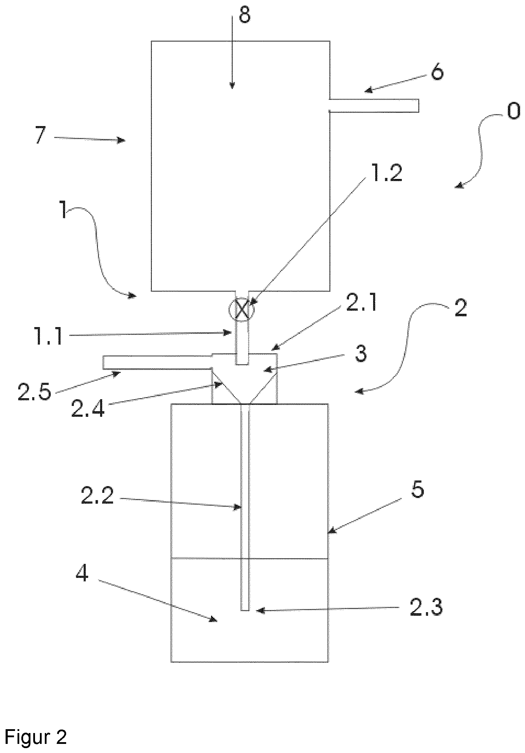

Figur 1 zeigt eine Anlage 0 zur Durchführung des erfindungsgemäßen Verfahrens, mit einer Dosiereinrichtung 1 und einem Regelorgan 1.2, das die portionsweise Dosierung der Mischung aus Schritt 1 in das Einleitungsmittel 2.2 erlaubt. Die Dosiervorrichtung 1 kann ebenfalls umfassen a) einen ersten Behälter 1.3 mit einer Gaszuleitung 1.4 und/oder einer Zuleitung (1.5, wie in Figur 1 dargestellt oder b) die Anlage umfasst eine Dosiervorrichtung 2 (Figur 2) mit Regelorgan 1.2 und umfasste einen Reaktor Schritt 1 (7) mit einer Zuleitung für Edukte 8 und gegebenenfalls einer Zuleitung für Inertgas 6. Die Dosiereinrichtung 1 ist mit einer Vorrichtung 2 verbunden, die ein Einleitungsmittel 2.2 aufweist, das üblicherweise ein Einleitungsrohr 2.2 oder ein Einleitungsschlauch 2.2 sein kann. Ferner weist die Vorrichtung 2 einen sogenannten zweiten Behälter 2.1 auf, dessen Zweck, der einer Art Mischkammer von Inertgas und Portionen oder Tropfen der Mischung aus Schritt 1 ist. Dazu hat der zweite Behälter 2.1 ein Lumen 3 und eine Gaszuleitung 2.5 und ist mit dem Einleitungsmittel 2.2, insbesondere Einleitungsrohr oder -schlauch 2.2 verbunden, wobei das Einleitungsmittel mit seinem Ende 2.3 in einen Reaktor Schritt 2 (5) eingeführt ist. Dabei ist die Länge des Einleitungsmittels so bemessen, dass das Ende 2.3 in die Lösung 4 eintaucht. Vorzugsweise ist das Ende möglichst tief der Lösung 4 eingetaucht.

In den Figuren 1 und 2 ist schematisch dargestellt, dass es bei einer Anlage 0 darauf ankommt, dass sie dazu geeignet ist, die Mischung aus Schritt 1 mit einem Regelorgan 1.2, das gegebenenfalls mit dem ersten Behälter 1.3 oder dem Reaktor Schritt 1 (7) verbunden ist, vorzugsweise mittels einer Zuleitung 1.1, definiert in das Lumen 3 des zweiten Behälters 2.1 zu überführen. Dort wird die Mischung aus Schritt 1 mit Inertgas überlagert und die einzelnen Tropfen werden quasi vom Inertgas separiert. Es ist daher wichtig, dass das Einleitungsmittel vorzugsweise einen Durchmesser hat oder derart beschaffen ist, dass ein Ineinanderlaufen der Portionen oder Tropfen in dem Einleitungsmittel selbst bei zügiger Dosierung verhindert wird. Ferner ist eine Gaszuleitung 2.5 mit dem Behälter 2.1 verbunden. Der Behälter 2.1 kann über eine Art Sammelvorrichtung 2.4 bspw. in Art eines Trichters, verfügen, die sich oberhalb des Einleitungsmittels 2.2 befindet. Das Einleitungsmittel ist vorzugsweise ein starres Rohr oder eine Kapillare 2.2, deren unteres Ende 2.3 so weit in den Reaktor 5 eingeführt ist, dass das Ende 2.3 bei Durchführung des Verfahrens in die Lösung 4 eingetaucht ist. Dabei kann zweite Behälter 2.1 ein Lumen 3 aufweisen, das es erlaubt die Mischung aus Schritt 1 bspw. tropfenweise in Gegenwart von Stickstoff in das Einleitungsrohr separiert einzubringen und unmittelbar in die Lösung im Reaktor des Schrittes 2 einzudüsen. Es kann daher ausreichend sein, wenn der zweite Behälter 2.1 eine Art Erweiterung im Einleitungsmittel 2.2 mit Gaszuleitung 2.5 darstellt.

### Bezugszeichenliste:

- 0: Anlage
- 1: Dosiervorrichtung
- 1.1: Zuleitung
- 1.2: Regelorgan
- 1.3: erster Behälter
- 1.4: Gaszuleitung
- 1.5: Zuleitung
- 2: Vorrichtung mit Einleitungsmittel
- 2.1: zweiter Behälter
- 2.2: Einleitungsmittel, insbesondere Einleitungsrohr/-schlauch
- 2.3: Ende Einleitungsmittel
- 2.4: Sammelvorrichtung
- 2.5: Gaszuleitung
- 3: Lumen
- 4: Lösung
- 5: Reaktor
- 6: Zuleitung (Inertgas)
- 7: Reaktor
- 8: Zuleitung (Edukte)

### Beispiel 1

Herstellung einer 8 % wässrigen Lösung aus K-Propylsiliconat und K-Silicat:

In einem 250-ml-Rundkolben mit Tropftrichter und Gasableitungsrohr wurden 100 g eines 1:1-Gemisches (bezogen auf die molare Zusammensetzung) aus Propyltrichlorsilan und Tetrachlorsilan vorgelegt. Unter kräftigem Rühren wurden langsam 10 g Ethanol zugegeben. Die Temperatur stieg bei der Zugabe an, durfte aber nicht über 60 °C steigen. Bei Bedarf wurde gegengekühlt. Nach vollständiger Zugabe des Ethanols wurde für weitere 10 min gerührt und die erhaltene Mischung wurde direkt weiterverwendet. In einem 500-ml-Rundkolben (5) mit Gaseinleitungsrohr (2.2) ohne Fritte wurden 300 g 40 % wässrige KOH vorgelegt. In einem Tropftrichter (1) mit N₂-Anschluss (1.4) wurden 50 g des Produktes aus dem ersten Reaktionsschritt vorgelegt. Das Produkt wurde nun langsam unter kräftigem Rühren, über das Gaseinleitungsrohr (2.2) zur wässrigen Lauge (4) gegeben. Dabei wird der N₂-Strom so geteilt, dass ein Teil auf den Inhalt des Tropftrichters (1) drückt, der andere Teil die Öffnung des Tropftrichters (1.1 in 3 der Vorrichtung 2) umspült. Beide Ströme werden im Gaseinleitungsrohr (2.2) wieder vereinigt. Während der Zugabe stieg die Temperatur an. Sollte sie über 60 °C ansteigen, sollte gegengekühlt werden. Nach vollständiger Zugabe wurde weitergerührt bis eine klare Lösung entstand.
²⁹Si-NMR (100 MHz, D₂O): δ = -46 (CH₃CH₂CH₂Si(O⁻)₃), -71 (Si(O⁻)₄).

Anschließend wurde bei 180 mbar und einer Badtemperatur von 50 °C das Ethanol abdestilliert und eine, der abdestillierten Ethanolmenge entsprechende Menge an Wasser zudosiert.

### Beispiel 2

Herstellung einer 11 % wässrigen Lösung aus K-Propylsiliconat und K-Silicat:

In einem 250-ml-Rundkolben mit Tropftrichter und Gasableitungsrohr wurden 100 g eines 1:1-Gemisches (bezogen auf die molare Zusammensetzung) aus Propyltrichlorsilan und Tetrachlorsilan vorgelegt. Unter kräftigem Rühren wurden langsam 10 g Ethanol zugegeben. Die Temperatur stieg bei der Zugabe an, sollte aber nicht über 60 °C ansteigen. Bei Bedarf wurde gegengekühlt. Nachvollständiger Zugabe des Ethanols wurde für weitere 10 min gerührt und die erhaltene Mischung direkt weiterverwendet. In einem 500-ml-Rundkolben (5) mit Gaseinleitungsrohr (2.2) ohne Fritte wurden 440 g 50% wässrige KOH vorgelegt. In einem Tropftrichter (1) mit N₂-Anschluss (1.4) wurden 100 g des Produktes aus dem ersten Reaktionsschritt vorgelegt. Das Produkt wurde nun langsam unter kräftigem Rühren, über das Gaseinleitungsrohr (1.4) zur wässrigen Lauge (4) gegeben. Dabei wurde der N₂-Strom so geteilt, dass ein Teil (1.4) auf den Inhalt des Tropftrichters (1) drückt, der andere Teil (2.5) die Öffnung des Tropftrichters (1.1 in 3 der Vorrichtung 2) umspült. Beide Ströme wurden im Gaseinleitungsrohr (2.2) wieder vereinigt. Während der Zugabe stieg die Temperatur an. Lag sie über 60 °C, wurde gegengekühlt. Nach vollständiger Zugabe wurde weitergerührt bis eine klare Lösung entstand.
²⁹Si-NMR (100 MHz, D₂O): δ = -45,6 (CH₃CH₂CH₂Si(O⁻)₃), -70,5 (Si(O⁻)₄).

Anschließend wurde bei 180 mbar und einer Badtemperatur von 50 °C das Ethanol abdestilliert und eine, der abdestillierten Ethanolmenge entsprechende Menge an Wasser zudosiert.

### Beispiel 3

### (erfindungsgemäße Mischung, ca. 479 ppm Wirkstoff):

1:1-Mischung aus n-Propylsiliconat und Silikat: 320 mg einer ca. 30 % wässrigen Lösung eines 1:1-Gemisches aus Kaliumpropylsiliconat und Kaliumorthosilicat wurden mit 200 ml demineralisiertem Wasser versetzt und die Mischung wurde für 15 min bei Raumtemperatur gerührt. Die resultierende Lösung wurde direkt verwendet.

### 4. Vergleichsbeispiel

### (Beispiel zu WO 02/083808, ca. 560 ppm Wirkstoff):

1:1-Mischung aus Methylsiliconat und Silicat: 160 mg einer ca. 34 % wässrigen Lösung eines Kaliummethylsiliconates und 160 mg Natriumwasserglas (35,5 % in Wasser, erhältlich bei der Firma Carl Roth GmbH) wurden mit 200 ml demineralisiertem Wasser versetzt und die Mischung wurde für 15 min bei Raumtemperatur gerührt. Die resultierende Lösung wurde direkt verwendet.

### 5. Vergleichsbeispiel

### (Beispiel zu WO 02/083808, ca. 490 ppm Wirkstoff):

1:1-Mischung aus Methylsiliconat und Silicat: 120 mg einer ca. 34 % wässrigen Lösung eines Kaliummethylsiliconates und 160 mg Natriumwasserglas (35,5 % in Wasser, erhältlich bei der Firma Carl Roth GmbH) wurden mit 200 ml demineralisiertem Wasser versetzt und die Mischung wurde für 15 min bei Raumtemperatur gerührt. Die resultierende Lösung wurde direkt verwendet.

### Ausprüfungen:

Massive Ziegelwürfel aus Poroton Vollziegel mit einer Kantenlänge von 50 mm wurden bei 25 °C und 60 % Feuchte für 24 h konditioniert und anschließend 5 s in die Lösungen aus den Beispielen 3, 4 und 5 getaucht. Anhaftende Feuchtigkeit wurde durch leichtes Abtupfen der Oberflächen mit einem Zellstofftuch entfernt. Die aufgenommene Produktmenge wurde durch Wägung bestimmt.

Anschließend wurden die behandelten Probekörper bei 25 °C und 60 % Feuchte für 14 Tage so gelagert, dass Luft von allen Seiten hinzutreten konnte. An diesen Probekörpern wurde die Reduktion der Wasseraufnahme in Anlehnung an DIN EN 13580 bestimmt. Dabei wurde die prozentuale Reduktion durch Vergleich mit einem unbehandelten Probekörper gleicher Art berechnet (Tabelle 1). Die folgende Tabelle 1 zeigt Verbrauchsmengen sowie Reduktion der Wasseraufnahme vor und nach Lagerung in KOH.

**Tabelle 1: Reduktion der Wasseraufnahme von Ziegel Bsp. 3, 4 und 5**

| Beispiel | Aufgenommene Produktmenge [g/m²] | Reduktion der Wasseraufnahme [%] | Reduktion der Wasseraufnahme [%] nach Lagerung in KOH |
|---|---|---|---|
| 3 | 353,3 | 12,2 | 12,5 |
| 4 | 366,7 | 9,0 | 9,9 |
| 5 | 380 | 4,2 | 4,9 |

| | | | |
|---|---|---|---|
| Lagerung in KOH, 24 h in Analogie zu DIN EN 13580. | | | |

Die Ergebnisse in Tabelle 1 zeigen klar, dass bei vergleichbarer und auch bei geringerer aufgenommener Produktmenge und bei vergleichbaren Wirkstoffkonzentrationen eine deutliche Verbesserung der Reduktion der Wasseraufnahme möglich ist, indem man die erfindungsgemäße Mischung aus Beispiel 3 verwendet.

### 6. Vergleichsbeispiel

### Herstellung einer 8% wässrigen Lösung aus K-Propylsiliconat und K-Silicat

In einem 250-ml-Rundkolben mit Tropftrichter und Gasableitungsrohr wurden 100 g eines 1:1-Gemisches (bezogen auf die molare Zusammensetzung) aus Propyltrichlorsilan und Tetrachlorsilan vorgelegt. Unter kräftigem Rühren wurden langsam 10 g Ethanol zugegeben. Die Temperatur stieg bei der Zugabe an. Sie sollte aber nicht über 60 °C steigen. Bei Bedarf wurde gegengekühlt. Nach vollständiger Zugabe des Ethanols wurde für weitere 10 min gerührt und die erhaltene Mischung direkt weiterverwendet.

In einem 500-ml-Rundkolben mit Gaseinleitungsrohr ohne Fritte wurden 300 g 40 % wässrige KOH vorgelegt. In einem Tropftrichter ohne N₂-Anschluss wurden 50 g des Produktes aus dem ersten Reaktionsschritt vorgelegt. Das Produkt wurde nun langsam, unter kräftigem Rühren, über das Gaseinleitungsrohr zur wässrigen Lauge gegeben. Die Zugabe musste bereits nach wenigen Millilitern unterbrochen werden, da die Zuleitungen verstopften.

## Patentansprüche

1. Lösung, enthaltend mindestens ein Siliconat und ein Silikat,
**dadurch gekennzeichnet,**
**dass** sie im Wesentlichen alkoholfrei ist und als Siliconat mindestens ein Propyl-funktionelles Alkali-Siliconat, mindestens ein Alkalisilicat und Co-Kondensationsprodukte dieser enthält, wobei als im Wesentlichen alkoholfrei gilt eine Lösung mit Gehalt bis maximal 2 Gew.-% an Alkohol und/oder Hydrolysealkohol und wobei Alkali unabhängig voneinander Natrium und Kalium ist.

2. Verfahren zur Herstellung einer im Wesentlichen alkoholfreien Lösung, umfassend mindestens ein Propyl-funktionelles Alkali-Siliconat, Silikate und deren Co-Kondensationsprodukte, umfassend die Schritte
1) Herstellen einer Mischung umfassend mindestens ein Propyl-funktionelles Silan der allgemeinen Formel I, mindestens ein Halogensilan der Formel II und Alkohol, indem
- mindestens ein Propyl-funktionelles Silan der allgemeinen Formel I
(R¹)ₓSiHal_{(y-x)} (I)
mit R¹ unabhängig ein Propyl-funktioneller Rest, mit hydrolysierbarem Rest Hal, der unabhängig Chlor oder Brom ist, x ist gleich 1 oder 2 und y gleich 4, und
- mindestens ein Halogensilan der Formel II
Si(Hal)₄ (II)
mit hydrolysierbarem Rest Hal, der unabhängig gleich Chlor oder Brom ist, und mindestens ein Alkohol und gegebenenfalls Wasser umgesetzt werden,
2) Einleiten der umgesetzten Mischung aus Schritt 1 in Gegenwart von Inertgas in eine wässerige Alkalihydroxid Lösung, wobei das Inertgas im Verfahren so zugeführt wird, dass es die Mischung aus Schritt 1 portionsweise unmittelbar in die wässrige alkalische Lösung einbringt,
3) Entfernen des Alkohols und/oder Hydrolysealkohols.

3. Verfahren nach Anspruch 2,
**dadurch gekennzeichnet,**
**dass** die Mischung in Schritt 1 und/oder die Lösung im Schritt 2 intensiv gerührt werden.

4. Verfahren nach einem der Ansprüche 2 oder 3,
**dadurch gekennzeichnet,**
**dass** in Schritt 2 eine Lösung umfassend Propyl-funktionelle Alkali-Siliconate, Silicate und gegebenenfalls deren Co-Kondensationsprodukte erhalten wird.

5. Verfahren nach einem der Ansprüche 2 bis 4,
**dadurch gekennzeichnet,**
**dass** das Propyl-funktionelle Silan der allgemeinen Formel I und das Halogensilan der Formel II in Schritt 1 in einem molaren Verhältnis von 0,5 : 10 bis 10 : 0,5 eingesetzt werden.

6. Verfahren nach einem der Ansprüche 2 bis 5,
**dadurch gekennzeichnet,**
**dass** der Alkohol in Verhältnis von 1 bis 100 mol-% in Bezug auf die hydrolysierbaren Reste in Mol zu gesetzt wird.

7. Verfahren nach einem der Ansprüche 2 bis 6,
**dadurch gekennzeichnet,**
**dass** die Mischung aus Schritt 1 unmittelbar in Schritt 2 in eine wässrige alkalische Lösung eingeleitet und zu einer Lösung umfassend Propyl-funktionelle Siliconate, Silicate und gegebenenfalls deren Co-Kondensationsprodukte umgesetzt wird.

8. Verfahren nach einem der Ansprüche 2 bis 7,
**dadurch gekennzeichnet,**
**dass** der Alkohol und/oder Hydrolysealkohol destillativ, bevorzugt unter vermindertem Druck und erhöhter Temperatur entfernt wird.

9. Verfahren nach einem der Ansprüche 2 bis 8,
**dadurch gekennzeichnet,**
**dass** der Anteil an Propyl-funktionellem Siliconat, Silikat und deren Co-Kondensationsprodukten in der Lösung zwischen 1 bis 40 Gew.-%, bezogen auf das Gesamtgewicht der Lösung, liegt, wobei gegebenenfalls der Gehalt durch Zugabe von Wasser eingestellt wird.

10. Verfahren nach einem der Ansprüche 2 bis 9,
**dadurch gekennzeichnet,**
**dass** die Mischung aus Schritt 1 mittels einer Dosiervorrichtung portionsweise in eine Vorrichtung mit Einleitungsmittel überführt wird und dort mittels des Inertgases durch das Einleitungsmittel in die alkalische Lösung gedrückt wird, insbesondere jeweils tropfenweise, vorzugsweise wird die Mischung aus Schritt 1 durch das Inertgas in die Lösung eingedüst, besonders vorzugsweise wird die Mischung aus Schritt 1 durch das Inertgas unter Druck in die Lösung eingedüst.

11. Lösung erhältlich nach einem Verfahren gemäß einem der Ansprüche 2 bis 10,
**dadurch gekennzeichnet,**
**dass** sie Propyl-funktionelle Alkali-Siliconate, Alkalisilicate und Co-Kondensationsprodukte von Propyl-funktionellen Alkali-Siliconaten mit Alkalisilicaten aufweist und im Wesentlichen alkoholfrei ist, wobei als im Wesentlichen alkoholfrei gilt eine Lösung mit einem Gehalt bis maximal 2 Gew.-% an Alkohol und/oder Hydrolysealkohol und wobei Alkali unabhängig voneinander Natrium und Kalium ist.

12. Verwendung einer Lösung erhalten nach einem der Ansprüche 2 bis 10 oder einer Lösung nach einem der Ansprüche 1 oder 11 zur Hydrophobierung von mineralischen Baustoffen, insbesondere zur Hydrophobierung der Oberfläche mineralischer Baustoffe oder zur Hydrophobierung von mineralischen Baustoffen in der Masse, wobei die mineralischen Baustoffe Beton, Estrich, Gips, Putz, Mörtel, Lehm, Ton, Ziegel, Sand, Keramik, Terrakotta, Kalksandstein Naturstein, wie Sandstein, Marmor, Granit umfassen.

## Claims

1. Solution containing at least one siliconate and a silicate, **characterized in that** it is essentially alcohol-free and contains, as siliconate, at least one propyl-functional alkali metal siliconate, at least one alkali metal silicate and co-condensation products thereof, wherein a solution is regarded as essentially alcohol-free if it has a content of up to a maximum of 2 wt.% of alcohol and/or hydrolysis alcohol and wherein alkali metal is independently sodium and potassium.

2. Method of preparing an essentially alcohol-free solution, comprising at least one propyl-functional alkali metal siliconate, silicates and co-condensation products thereof, comprising the steps of:
1) preparing a mixture comprising at least one propyl-functional silane of general formula I, at least one halosilane of formula II and alcohol, in which
- at least one propyl-functional silane of general formula I
(R¹)ₓSiHal_{(y-x)} (I)
with R¹ independently a propyl-functional residue, with hydrolysable residue Hal, which is independently chlorine or bromine, x is 1 or 2 and y is 4, and
- at least one halosilane of formula II
Si(Hal)₄ (II)
with hydrolysable residue Hal, which is independently chlorine or bromine, and at least one alcohol and optionally water are reacted,
2) introducing the reacted mixture from step 1 in the presence of inert gas into an aqueous alkali hydroxide solution, wherein the inert gas is supplied in the process so that it introduces the mixture from step 1 a little at a time directly into the aqueous alkaline solution,
3) removing the alcohol and/or hydrolysis alcohol.

3. Method according to Claim 2, **characterized in that** the mixture in step 1 and/or the solution in step 2 are stirred vigorously.

4. Method according to one of Claims 2 or 3, **characterized in that** a solution comprising propyl-functional alkali metal siliconates, silicates and optionally co-condensation products thereof is obtained in step 2.

5. Method according to one of Claims 2 to 4, **characterized in that** the propyl-functional silane of general formula I and the halosilane of formula II are used in step 1 in a molar ratio from 0.5 : 10 to 10 : 0.5.

6. Method according to one of Claims 2 to 5, **characterized in that** the alcohol is added in a ratio from 1 to 100 mol.% relative to the hydrolysable residues in mol.

7. Method according to one of Claims 2 to 6, **characterized in that** the mixture from step 1 is introduced immediately in step 2 into an aqueous alkaline solution and is reacted to a solution comprising propyl-functional siliconates, silicates and optionally co-condensation products thereof.

8. Method according to one of Claims 2 to 7, **characterized in that** the alcohol and/or hydrolysis alcohol are removed by distillation, preferably under reduced pressure and at elevated temperature.

9. Method according to one of Claims 2 to 8, **characterized in that** the proportion of propyl-functional siliconate, silicate and co-condensation products thereof in the solution is between 1 and 40 wt.%, relative to the total weight of the solution, wherein the content is adjusted if necessary by adding water.

10. Method according to one of Claims 2 to 9, **characterized in that** the mixture from step 1 is transferred by means of a metering device a little at a time into a device with a delivery means and there it is forced by means of the inert gas through the delivery means into the alkaline solution, in particular in each case dropwise, preferably the mixture from step 1 is injected by the inert gas into the solution, especially preferably the mixture from step 1 is injected by the inert gas under pressure into the solution.

11. Solution obtainable by a method according to one of Claims 2 to 10, **characterized in that** it has propyl-functional alkali metal siliconates, alkali metal silicates and co-condensation products of propyl-functional alkali metal siliconates with alkali metal silicates and is essentially alcohol-free, wherein a solution is regarded as essentially alcohol-free if it has a content of up to a maximum of 2 wt.% of alcohol and/or hydrolysis alcohol and wherein alkali metal is independently sodium and potassium.

12. Use of a solution obtained according to one of Claims 2 to 10 or of a solution according to one of Claims 1 or 11 for the hydrophobization of mineral building materials, in particular for the hydrophobization of the surface of mineral building materials or for the hydrophobization of mineral building materials in the bulk, wherein the mineral building materials comprise concrete, screed, gypsum, plaster, mortar, loam, clay, brick, sand, ceramic, terracotta, lime sandstone, natural stone, such as sandstone, marble, granite.

## Revendications

1. Solution, contenant au moins un siliconate et un silicate,
**caractérisée en ce qu'**elle est pratiquement sans alcool et contient au moins un siliconate de métal alcalin à fonction propyle en tant que siliconate, au moins un silicate de métal alcalin et des produits de co-condensation de ceux-ci, en entendant par pratiquement sans alcool une solution ayant une teneur de jusqu'à 2 % en poids au maximum en alcool et/ou alcool d'hydrolyse, et le métal alcalin étant, indépendamment l'un de l'autre, le sodium ou le potassium.

2. Procédé pour la préparation d'une solution pratiquement sans alcool, comprenant au moins un siliconate de métal alcalin à fonction propyle, des silicates et leurs produits de co-condensation, comprenant les étapes
1) préparation d'un mélange comprenant au moins un silane à fonction propyle de formule générale I, au moins un halogénosilane de formule II et un alcool, par mise en réaction
- d'au moins un silane à fonction propyle de formule générale I
(R¹)ₓSiHal_{(y-x)} (I)
où R¹ représente chaque fois indépendamment un radical à fonction propyle, Hal est un radical hydrolysable qui est chaque fois indépendamment un atome de chlore ou de brome, x est égal à 1 ou 2 et y est égal à 4, et
- d'au moins un halogénosilane de formule II
Si(Hal)₄ (II)
où Hal est un radical hydrolysable qui est chaque fois indépendamment un atome de chlore ou de brome, et d'au moins un alcool et éventuellement de l'eau,
2) envoi du mélange ayant réagi, provenant de l'étape 1, en présence de gaz inerte, dans une solution aqueuse d'un hydroxyde de métal alcalin, dans le procédé le gaz inerte étant ajouté de telle façon qu'il introduit par portions le mélange provenant de l'étape 1 immédiatement dans la solution aqueuse alcaline,
3) élimination de l'alcool et/ou de l'alcool d'hydrolyse.

3. Procédé selon la revendication 2,
**caractérisé en ce**
**qu'**on agité énergiquement le mélange dans l'étape 1 et/ou la solution dans l'étape 2.

4. Procédé selon l'une quelconque des revendications 2 et 3,
**caractérisé en ce que**
dans l'étape 2 on obtient une solution comprenant des siliconates à fonction propyle, des silicates et éventuellement leurs produits de co-condensation.

5. Procédé selon l'une quelconque des revendications 2 à 4,
**caractérisé en ce que**
dans l'étape 1 on utilise le silane à fonction propyle de formule générale I et l'halogénosilane de formule II en un rapport molaire de 0,5 : 10 à 10 : 0,5.

6. Procédé selon l'une quelconque des revendications 2 à 5,
**caractérisé en ce**
**qu'**on ajoute l'alcool en un rapport de 1 à 100 % en moles par rapport aux radicaux hydrolysables en moles.

7. Procédé selon l'une quelconque des revendications 2 à 6,
**caractérisé en ce que**
le mélange provenant de l'étape 1 est dans l'étape 2 immédiatement envoyé dans une solution aqueuse alcaline et converti en une solution comprenant des siliconates à fonction propyle, des silicates et éventuellement leurs produits de co-condensation.

8. Procédé selon l'une quelconque des revendications 2 à 7,
**caractérisé en ce**
**qu'**on élimine l'alcool et/ou l'alcool d'hydrolyse par distillation, de préférence sous pression réduite et à température élevée.

9. Procédé selon l'une quelconque des revendications 2 à 8,
**caractérisé en ce que**
dans la solution la proportion de siliconate à fonction propyle, de silicate et de leurs produits de co-condensation est comprise entre 1 et 40 % en poids, par rapport au poids total de la solution, la teneur étant éventuellement ajustée par addition d'eau.

10. Procédé selon l'une quelconque des revendications 2 à 9,
**caractérisé en ce que**
le mélange provenant de l'étape 1 est transféré par portions au moyen d'un dispositif doseur dans un dispositif à moyen d'introduction et y est introduit sous pression par le moyen d'introduction dans la solution alcaline, au moyen du gaz inerte, en particulier chaque fois goutte à goutte, de préférence le mélange provenant de l'étape 1 est injecté par le gaz inerte dans la solution, de façon particulièrement préférée le mélange provenant de l'étape 1 est injecté sous pression par le gaz inerte dans la solution.

11. Solution pouvant être obtenue conformément à un procédé selon l'une quelconque des revendications 2 à 10, **caractérisée en ce**
**qu'**elle comporte des siliconates de métaux alcalins à fonction propyle, des silicates de métaux alcalins et des produits de co-condensation de siliconates de métaux alcalins à fonction propyle avec des silicates de métaux alcalins et est pratiquement sans alcool, en entendant par pratiquement sans alcool une solution ayant une teneur de jusqu'à 2 % en poids au maximum en alcool et/ou alcool d'hydrolyse, et le métal alcalin étant, indépendamment l'un de l'autre, le sodium ou le potassium.

12. Utilisation d'une solution obtenue selon l'une quelconque des revendications 2 à 10 ou d'une solution selon l'une quelconque des revendications 1 et 11, pour l'hydrophobisation de matériaux de construction minéraux, en particulier pour l'hydrophobisation de la surface de matériaux de construction minéraux ou pour l'hydrophobisation de matériaux de construction minéraux dans la masse, les matériaux de construction minéraux comprenant le béton, une chape, le plâtre, un enduit, un mortier, un torchis, l'argile, la brique, le sable, la céramique, la terre cuite, le grès silico-calcaire, une pierre naturelle, telle que le grès, le marbre, le granit.
